# DEMANDE DE BREVET EUROPEEN

(11) **EP 2 063 248 A1**
(43) Date de publication de la demande: **27.05.2009**
(21) Numéro de dépôt: 08168660.2
(22) Date de dépôt: 07.11.2008
(51) Int. Cl.: G01N 1/22

(54) **Dispositif d`échantillonnage comprenant un corps principal de diffusion et un bouchon de fermeture**

(30) Priorité: 20.11.2007 FR 0759164
(71) Demandeur: Laboratoire Excell, 33700 Merignac (FR)
(72) Inventeur: Chatonnet, Pascal, 33000 BORDEAUX (FR); Boutou, Stéphane, 33420 JUGAZAN (FR); Granet, Jonathan, 33000 BORDEAUX (FR)
(74) Mandataire: Schmit, Christian Norbert Marie

(57) **Abrégé**

L'objet de l'invention est un dispositif (1) pour prélever des échantillons de composés présents dans l'air ambiant, comprenant un support de piégeage (3) recouvert d'un agent adsorbant desdits composés.

Selon l'invention, le dispositif comprend
- un corps principal (9) pourvu d'un orifice d'entrée (10) adapté pour l'introduction du support (3) et un logement (8) pour le recevoir (3) ;
- des moyens de blocage (5, 6) apte à maintenir ledit au moins un support dans une position d'appui dans le logement (8) ;
- ledit corps principal (9) comprenant au moins une ouverture (13) sur sa paroi latérale (12), ledit support (3) étant positionné dans le logement (8) du corps principal (9) de telle sorte que la surface d'adsorption de l'agent est placée au moins en regard de ladite ouverture (8) de manière à mettre en contact direct la surface d'adsorption avec l'air ambiant ;
- un bouchon de fermeture (2) adapté à venir s'engager sur ledit corps principal (9) de façon à engendrer une fermeture hermétique aux composés entre l'extérieur et ledit corps principal lorsque le dispositif n'est pas en position de prélèvement des échantillons de composés.

## Description

La présente invention concerne un dispositif pour prélever des échantillons de composés tels que des substances volatiles présentes dans l'air libre, en particulier pour prélever des échantillons de ces composés polluants ou indésirables présents dans l'air pour pourvoir procéder ultérieurement à la détermination en teneur de tels composés pour le contrôle environnemental ou le contrôle d'ambiance.

De tels dispositifs sont par exemple largement mis en oeuvre dans l'industrie pour contrôler le risque d'altération des caractères organoleptiques ou de contamination des produits tels que les légumes ou les fruits lorsqu'ils étaient mis en contact avec des composés polluants présents l'atmosphère depuis la récolte jusqu'à son conditionnement. A titre d'exemple d'application, dans certains vins, on peut détecter parfois une note olfactive décrite comme une odeur moisie. Ce défaut sensoriel est en particulier dû à la présence dans le vin des composés organochlorés de la famille des chloroanisoles, ces composés peuvent être transmis par l'atmosphère contaminée. Ainsi afin d'empêcher cette contamination, il est nécessaire de contrôler régulièrement le niveau de pollution de l'air des ambiances d'élaboration, de stockage et de transport pour détecter et quantifier la présence de contaminants indésirables.

On connaît des dispositifs d'échantillonnages dont le fonctionnement est basé uniquement sur le phénomène de la diffusion des molécules vers un adsorbant actif ou passif sans pompage de l'air. Dans ce mode de fonctionnement, les dispositifs existants prévoient un corps de diffusion, généralement un support poreux se présentant sous la forme d'un badge ou d'un tube à l'intérieur duquel est incorporé un agent adsorbant. Les molécules, en diffusant à travers la paroi poreuse viennent se faire piéger par voie physique ou par voie chimique sur l'agent.

Un tel dispositif ne permet pas toujours de réaliser un échantillonnage représentatif et efficace, car la surface de collecte est limitée et relativement faible. En outre un tel dispositif nécessite une mise en oeuvre très complexe et doit être manipulé avec précaution par un technicien formé. En particulier un tel dispositif n'est pas très pratique pour le renouvellement de l'agent adsorbant en vue de la réutilisation du badge après un premier échantillonnage.

Le document FR 2 821 159 décrit un dispositif d'échantillonnage amélioré par rapport aux dispositifs classique précités en montant le support poreux imprégné par un agent de piégeage dans un boîtier cylindrique. Ce boîtier présente à ses extrémités des ouvertures de passage d'air permettant la diffusion des composés polluants et assure les échanges d'air entre l'intérieur et l'extérieur du boîtier. La présence du boîtier permet de limiter les mouvements de l'air autour du support poreux de façon à garantir un échantillonnage passif. Le support poreux est maintenu verticalement et centré dans le boîtier au moyen d'une barre qui est elle-même retenue dans la partie terminale du boîtier. Cette barre est amovible de façon à permettre le placement du support poreux ou l'extraction du support après exposition pendant un temps déterminé pour l'analyse chimique.

Toutefois, avec une telle conception, il est nécessaire d'extraire le support poreux tout de suite après exposition, afin de pouvoir le stocker à l'abri de l'air ambiant, puis effectuer les dosages. En effet les ouvertures de passage d'air sont présentes de manière permanente sur le dispositif. L'extraction du support poreux de la boîte ainsi que son montage, génère un intervalle de temps pendant lequel l'agent adsorbant est exposé. Ces expositions non voulues peuvent rendre les résultats d'analyse moins précis, son interprétation peut être très délicat et entachée d'incertitude.

La capacité d'adsorption d'un tel dispositif reste faible, nécessitant une durée d'exposition de l'ordre de l'heure ou de plusieurs heures pour obtenir un échantillonnage représentatif. En effet les ouvertures de passage d'air sont réalisées seulement par les intervalles et les brèches qui subsistent entre les barres et la périphérie interne du boîtier. Ce ne sont pas réellement des ouvertures, elles ne permettant pas une diffusion et des échanges d'air très rapides, ce qui implique des temps d'adsorption relativement longs.

De plus, le montage du support poreux dans le boîtier est relativement complexe, nécessitant une série d'opérations qui consiste à visser tout d'abord le support poreux sur un bouchon, de visser le support poreux sur la barre, puis d'introduire la barre dans le boîtier qui est ensuite immobilisée par rotation.

La présente invention vise à fournir un dispositif d'échantillonnage passif qui remédie les inconvénients précités, simple dans sa conception et à faible coût, tout en permettant d'assurer un échantillonnage très rapide, efficace, sensible et facile à mettre en oeuvre.

Il est important que l'opérateur ait le moins d'opérations à effectuer pour mettre en oeuvre le dispositif. Ces gestes doivent être simples afin de diminuer les risques d'erreur de manipulation.

A cet effet, l'invention concerne un dispositif pour prélever des échantillons de composés présents dans l'air ambiant, comprenant un support de piégeage recouvert d'un agent adsorbant desdits composés.

Selon l'invention, ledit dispositif comprend
- un corps principal pourvu d'un orifice d'entrée adapté pour l'introduction du support et un logement pour le recevoir ;
- des moyens de blocage apte à maintenir ledit au moins un support dans une position d'appui dans le logement ;
- ledit corps principal comprenant au moins une ouverture sur sa paroi latérale, ledit support étant positionné dans le logement du corps principal de telle sorte que la surface d'adsorption de l'agent adsorbant est placée au moins en regard de ladite une ouverture de manière à mettre en contact direct la surface d'adsorption avec l'air ambiant,
- un bouchon de fermeture adapté à venir s'engager sur ledit corps de façon à engendrer une fermeture hermétique aux composés entre l'extérieur et ledit corps principal lorsque le dispositif n'est pas en position de prélèvement des échantillons de composés.

Ainsi, la présence des ouvertures sur la paroi latérale du corps principal permet une exposition directe de la surface adsorbante avec l'air ambiant, conférant ainsi une adsorption efficace tout en évitant le contact de la surface adsorbante du support avec de l'air turbulent. Cette augmentation de la sensibilité du dispositif permet de réduire de manière significative la durée d'exposition. A titre d'exemple, pour un dispositif ayant une surface adsorbante de l'ordre de 2,5 cm² une exposition de l'ordre de 15 minutes est suffisant pour détecter une teneur limite de l'ordre du ng/m3 pour les anisoles.

Dans différents modes de réalisation particuliers de ce dispositif, chacun ayant ses avantages particuliers et susceptibles de nombreuses combinaisons techniques possibles:
- ledit bouchon et ledit corps principale comportent des moyens d'assemblage qui coopèrent ensemble pour permettre la fermeture hermétique.

Ainsi, pour procéder au prélèvement d'un échantillon des composés polluants, il suffit d'enlever le bouchon de fermeture pour débuter l'exposition. Au bout d'un temps déterminé au cours duquel les composés sont piégés par l'agent, il suffit de remettre en place le bouchon. Le dispositif est ensuite envoyé au laboratoire pour extraire les composés par des méthodes classiques tels que la désorption thermique directe et les analyser par exemple par chromatographie en phase gazeuse couplée à la spectrométrie de masse.
- lesdits moyens d'assemblage sont constitués par un filetage interne réalisé sur ledit bouchon qui coopère en fonctionnement avec un filetage extérieur réalisé sur le corps principal,
- le corps principal comporte une embase située à l'extrémité opposée à l'orifice d'entrée, ladite embase ayant une surface d'appui pour poser le dispositif sur une surface plane et définissant un épaulement d'appui pour la face annulaire plane du bouchon.
- l'embase et le bouchon présentent sur au moins une partie de la surface extérieure de leur paroi latérale une surface striée ou quadrillée.

Avantageusement, les moyens de blocage comportent une vis filetée reçue par filetage dans l'orifice d'entrée et un ressort, ledit ressort comportant une face inférieure prenant appui sur une extrémité supérieure du support et une face supérieure sur laquelle prend appui la face inférieure de la vis lorsque le support est en position dans le logement. Ainsi une telle configuration de maintien permet de limiter les surfaces de contacts du support avec les moyens de blocage, en outre elle permet un montage très simple du support dans le logement du corps.
- le logement a une forme adaptée pour coopérer avec la forme du support pour l'introduire dans le logement sans exercer de contraintes sur la paroi interne du logement. De cette façon, la surface adsorbant de l'agent qui est généralement un polymère n'est pas en contact avec la paroi interne du logement, le support étant maintenu dans le logement en ayant uniquement son extrémité inférieur en contact avec le fond du logement.

Pour faciliter le maintien du support qui a de préférence une forme tubulaire ayant ses extrémités arrondies, le fond du logement comporte avantageusement un évidement ayant une section de forme conique.

Selon un mode avantageux de réalisation, le corps principal a une forme tubulaire, le logement étant agencé dans le corps principal de façon à ce que le support est coaxial au corps principal. Cet agencement particulier permet d'obtenir une adsorption plus efficace, car uniformément répartie sur toute la surface d'adsorption de l'agent.

L'invention concerne également un set pour la mise en oeuvre du prélèvement des échantillons de composés présents dans l'air ambiant, ce set étant équipé d'un dispositif d'échantillonnage tel que décrit ci-dessus. Selon l'invention, il comprend en outre un ensemble de supports, chacun des supports étant couvert d'un agent adsorbant et chacun desdits supports étant stocké dans un tube fermé prévu à cet effet ainsi qu'un outil adapté pour saisir le support et l'introduire dans le logement dudit dispositif d'échantillonnage.

L'invention sera décrite plus en détail en référence aux dessins annexés dans lesquels:
- la figure 1 représente schématiquement une vue en coupe d'un dispositif d'échantillonnage selon l'invention, le dispositif étant dans une position dans laquelle le corps principal est fermé par le bouchon ;
- la figure 2 est une vue en perspective du corps principal du dispositif de la figure 1;
- la figure 3A est une vue de dessus du corps principal du dispositif de la Figure 1;
- la figure 3B est une vue de dessus du bouchon du dispositif de la figure 1 ;

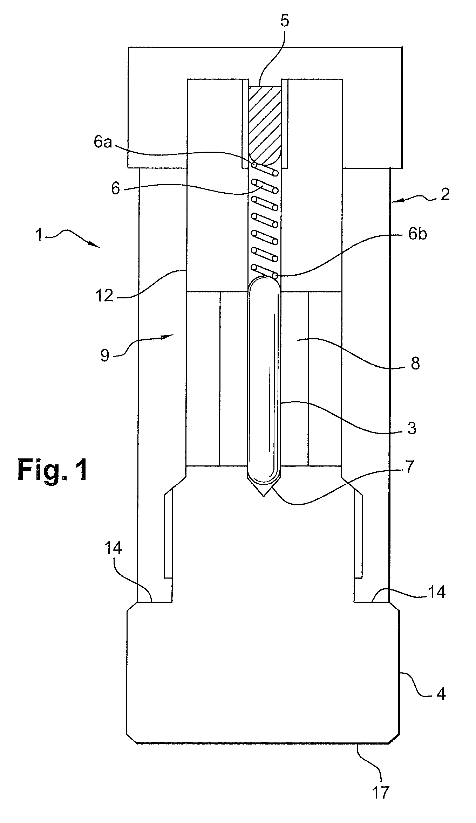

La figure 1 montre un dispositif selon l'invention pour prélever des échantillons de composés présents dans l'air ambiant, comprenant un support de piégeage 3 recouvert d'un agent adsorbant desdits composés. La composition de l'agent adsorbant varie selon le composé que l'on souhaite prélever. A titre d'exemple, pour le prélèvement passif des composés volatiles tels que les haloanisoles, l'agent est un polymère sélectionné parmi le groupe constitué de polydimethylsiloxanes.

Le support de piégeage 3 qui a la forme tubulaire ou de barreau est préparé à l'avance pour être prêt à l'emploi et il est ensuite stocké dans un tube fermé destiné à cet effet.

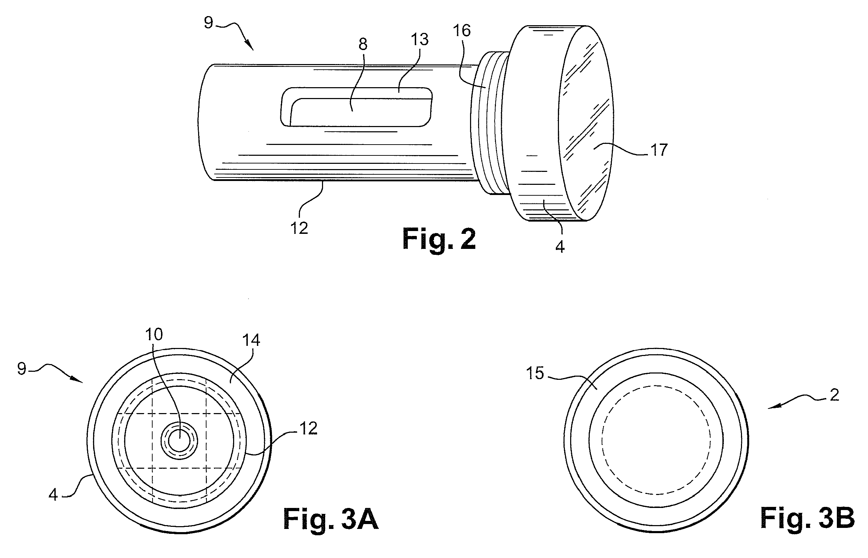

Le dispositif comprend un corps principal 9 pourvu d'un orifice d'entrée 10 adapté pour l'introduction du support 3 et un logement 8 pour recevoir le support (figure 3.A).

Le support est introduit dans le logement 8 au moyen d'un outil adapté tel qu'une pince.

La dimension du logement 8 est légèrement supérieure à la dimension du support de sorte que l'introduction du support ne génère pas de contraintes sur la paroi interne du logement, la surface adsorbante de l'agent n'étant ainsi pas mise en contact avec la paroi interne du logement.

De préférence, ce logement 8 a une forme sensiblement tubulaire qui coopère avec la forme du support 3 pour faciliter d'une part son introduction et d'autre part son maintien dans le logement sans être fixé.

Dans un mode avantageux de réalisation, le fond du logement 8 comporte un évidement ayant une section de forme conique 7 de sorte que l'extrémité inférieure du support ne soit pas entièrement en contact avec la surface du fond. De plus, cette forme conique permet de faciliter le centrage et le maintien en position du support dans le logement 8, en particulier elle permet de faciliter la mise en place des moyens de blocage qui viennent maintenir le support dans le logement.

Généralement le corps principal 9 a une forme tubulaire, le logement 8 étant agencé dans le corps principal de façon à ce que le support 3 est coaxial au corps principal.

Le support est maintenu dans le logement au moyen d'une vis filetée 5 reçue par filetage dans l'orifice d'entrée 10 qui est muni d'un filetage complémentaire et d'un ressort 6 légèrement comprimé sous l'effet du vissage de la vis. Dans le cas illustré sur la figure 1, le ressort comporte une face inférieure 6b prenant appui sur une extrémité supérieure du support 3 et une face supérieure 6a sur laquelle prend appui la face inférieure de la vis. Le support 3 est ainsi maintenu verticalement dans le logement 8 par une légère contrainte verticale exercée par le ressort 6 et la vis 5.

La mise en place de la vis peut être effectuée au moyen d'une clé adaptée. Elle peut être également réalisée sans outil, l'extrémité de la vis filetée comporte alors une tête ayant une dimension adaptée pour faciliter la préhension par la main.

Avantageusement l'extrémité du ressort 6a peut être rendue au préalable solidaire à l'extrémité de la vis, permettant ainsi en supprimant l'étape d'insertion du ressort de simplifier l'étape de mise en place du support dans le logement.

La figure 2 illustre un exemple du corps principal 9 comportant avantageusement une ouverture 13 sur sa paroi latérale 12. Le support 3 est positionné dans le logement 8 du corps principal 9 de telle sorte que la surface d'adsorption de l'agent est placée en regard de cette ouverture 13 de manière à mettre en contact direct la surface d'adsorption avec l'air ambiant. Le nombre d'ouvertures latérales 13 ainsi que leurs tailles ne constituent pas un élément limitatif de la présente invention.

Dans le cas où le support ne présente pas une forme de symétrie de révolution et n'est pas recouvert entièrement d'agent adsorbant, il est possible d'orienter le support 3 dans le logement 8 de telle sorte que la surface d'adsorption soit mise en regard de l'ouverture latérale 13. Pour cela, il suffit de réaliser des indices de positionnement correspondants au niveau de l'orifice d'entrée 10 et sur le support 3.

Le dispositif comprend en outre un bouchon de fermeture 2 adapté à venir s'engager sur ledit corps principal 9 de façon à engendrer avantageusement une fermeture hermétique aux composés entre l'extérieur et ledit corps principal lorsque le dispositif n'est pas en position de prélèvement des échantillons de composés.

Avantageusement après l'exposition, il n'est plus nécessaire d'extraire tout de suite le support d'adsorption, il suffit de fermer le dispositif au moyen du bouchon de fermeture 2 et envoyer l'ensemble au laboratoire pour l'analyse.

Le bouchon 2 comporte un filetage interne, le corps principal étant pourvu sur au moins une partie de sa surface extérieure un filetage extérieur 16 complémentaire du filetage interne. Ce bouchon est amovible et permet donc d'isoler le corps principal 9 de l'extérieur, par là même de stocker le support de piégeage à l'abri de l'air ambiant lorsque le dispositif n'est pas en position d'utilisation ou d'exposer le support de piégeage lorsque le dispositif est en position de prélèvement des échantillons de composés.

Les moyens d'assemblage peuvent être également constitués par un dispositif d'attache rapide par encliquetage (non illustré ici), lequel comportant une pluralité d'éléments en saillie réalisés sur la paroi interne du bouchon ou sur la surface extérieure du corps principal qui coopère en fonctionnement avec des encoches correspondantes. Pour rendre le bouchon bloqué sur le corps principal, il suffit d'enfoncer le bouchon de sorte que les éléments en saillie viennent s'engager dans les encoches. Et pour enlever le bouchon, les encoches comportent à ses extrémités latérales des coins arrondis permettant de désengager les éléments en saillie en faisant tourner le bouchon.

Pour faciliter le positionnement du dispositif, le corps principal 9 comporte une embase 4 située à l'extrémité opposée à l'orifice d'entrée 10. Cette embase 4 comporte une surface d'appui 17 pour poser le dispositif sur une surface plane et définit également un épaulement d'appui 14 pour la face annulaire plane 15 du bouchon (figure 3A et figure 3B).

Avantageusement, pour garantir une meilleure isolation entre l'extérieur et l'intérieur du dispositif d'échantillonnage lorsqu'il n'est pas exposé, il est possible de prévoir un joint pour mieux sceller l'ensemble du dispositif, un tel joint peut être disposé sur l'épaulement d'appui.

Afin de faciliter la préhension du dispositif et notamment pour enlever le bouchon par rotation, l'embase et le bouchon présentent sur au moins une partie de la surface extérieure de leur paroi latérale une surface striée ou quadrillée.

Le corps principal 9 et le bouchon 2 sont réalisés dans un matériau métallique inoxydable facilement décontaminable par un lavage et un chauffage à haute température (200°C) ou dans un matériau plastique empêchant le risque d'adsorptions rémanentes susceptibles de parasiter les mesures effectuées. Généralement le poids du dispositif ne dépasse pas 80 g, avec une hauteur de l'ordre de 7 cm et une largeur de l'ordre de 3 cm, conférant par conséquent au dispositif un caractère hautement portatif.

La présente invention concerne également un set pour la mise en oeuvre du prélèvement des échantillons de composés présents dans l'air ambiant. Un tel set est équipé d'un dispositif d'échantillonnage tel que décrit ci-dessus, et il comporte en plus un ensemble de supports recouverts d'un agent adsorbant stockés chacun dans un tube fermé prévu à cet effet, les supports étant prêts à l'emploi. Le dispositif ainsi que les tubes sont contenus dans un boîtier. Le set peut comporter également un outil tel qu'une pince adapté pour extraire le support du tube et l'introduire dans le logement. Un tel set permet de faciliter l'opérateur pour effectuer une série de prélèvements des échantillons de composés soit au cours d'une journée pour obtenir l'évolution de sa teneur dans le temps soit à différents endroits du lieu susceptible d'être contaminé pour établir une cartographie spatiale de la contamination à un instant donné.

## Revendications

1. Dispositif (1) pour prélever des échantillons de composés tels que des substances volatiles présentes dans l'air ambiant, comprenant un support de piégeage (3) recouvert d'un agent adsorbant desdits composés, **caractérisé en ce que** ledit dispositif comprend
- un corps principal (9) pourvu d'un orifice d'entrée (10) adapté pour l'introduction du support (3) et un logement (8) pour le recevoir ;
- des moyens de blocage (5, 6) aptes à maintenir ledit support (3) dans une position d'appui dans le logement (8) ;
- ledit corps principal (9) comprenant au moins une ouverture (13) sur sa paroi latérale (12), ledit support (3) étant positionné dans le logement (8) du corps principal (9) de telle sorte que la surface d'adsorption de l'agent est placée au moins en regard de ladite ouverture (13) de manière à mettre en contact direct la surface d'adsorption avec l'air ambiant.
- un bouchon de fermeture (2) adapté à venir s'engager sur ledit corps principal (9) de façon à engendrer une fermeture hermétique aux composés entre l'extérieur et ledit corps principal lorsque le dispositif n'est pas en position de prélèvement des échantillons de composés.

2. Dispositif selon la revendication 1, **caractérisé en ce que** ledit bouchon (2) et ledit corps principale (9) comportent des moyens d'assemblage qui coopèrent ensemble pour permettre la fermeture hermétique.

3. Dispositif selon la revendication 2, **caractérisé en ce que** lesdits moyens d'assemblage sont constitués par un filetage interne réalisé sur ledit bouchon (2) qui coopère en fonctionnement avec un filetage extérieur (16) réalisé sur le corps principal complémentaire du filetage interne.

4. Dispositif selon l'une des revendications 1 à 3, **caractérisé en ce que** le corps principal comporte une embase (4) située à l'extrémité opposée à l'orifice d'entrée, ladite embase ayant une surface d'appui (17) pour poser le dispositif sur une surface plane et définissant un épaulement d'appui (14) pour la face annulaire plane (15) du bouchon de fermeture (2).

5. Dispositif selon la revendication 4, **caractérisé en ce que** l'embase (4) et le bouchon (2) présentent sur au moins une partie de la surface extérieure de leur paroi latérale une surface striée ou quadrillée.

6. Dispositif selon l'une des revendications 1 à 5, **caractérisé en ce que** les moyens de blocage comportent une vis filetée (5) reçue par filetage dans l'orifice d'entrée (10) et un ressort (6), ledit ressort comportant une face inférieure (6b) prenant appui sur une extrémité supérieure du support (3) et une face supérieure (6a) sur laquelle prend appui la face inférieure de la vis lorsque le support (3) est en position dans le logement (8).

7. Dispositif selon l'une des revendications 1 à 6, **caractérisé en ce que** le logement (8) a une forme adaptée pour coopérer avec la forme du support (3) pour l'introduire dans le logement sans exercer de contraintes sur la paroi interne du logement.

8. Dispositif selon la revendication 7, **caractérisé en ce que** le fond du logement comporte un évidement ayant une section de forme conique (7).

9. Dispositif selon l'une des revendications 1 à 8, **caractérisé en ce que** le corps principal (9) a une forme tubulaire, le logement (8) étant agencé dans le corps principal de façon à ce que le support (3) est coaxial au corps principal.

10. Dispositif selon l'une des revendications 1 à 9, **caractérisé en ce que** le corps principal (9) et le bouchon (2) sont réalisés dans un matériau métallique inoxydable ou dans un matériau plastique.

11. Set pour la mise en oeuvre du prélèvement des échantillons de composés présents dans l'air ambiant, ledit set étant équipé d'un dispositif d'échantillonnage (1) selon l'une des revendications 1 à 10, **caractérisé en ce qu'**il comporte en outre un ensemble de supports de piégeage (3), chacun des supports étant couvert d'un agent adsorbant et chacun desdits supports étant stocké dans un tube fermé prévu à cet effet, ainsi qu'un outil adapté pour saisir le support et l'introduire dans le logement (8) du corps principal (9) du dispositif d'échantillonnage (1).
